# EUROPEAN PATENT SPECIFICATION

(11) **EP 3 148 208 B1**
(45) Date of publication and mention of the grant of the patent: **22.07.2020**
(21) Application number: 14892684.3
(22) Date of filing: 26.09.2014
(51) Int. Cl.: H04N 21/472, H04N 21/222, H04N 21/235, H04N 21/237, H04N 21/258, H04N 21/262, H04N 21/2668, H04N 21/462, H04N 21/61, H04N 21/643, H04N 21/24

(54) **VIDEO ACCESS METHOD AND SYSTEM, SET TOP BOX, PROXY SERVER AND MEDIA SERVER**
VIDEOZUGANGSVERFAHREN UND SYSTEM, DIGITALEMPFÄNGER, PROXY-SERVER UND MEDIENSERVER
PROCÉDÉ ET SYSTÈME D'ACCÈS VIDÉO, BOÎTIER DÉCODEUR, SERVEUR MANDATAIRE, ET SERVEUR MULTIMÉDIA

(30) Priority: 22.05.2014 CN 201410217218
(43) Date of publication of application: 29.03.2017
(73) Proprietor: ZTE Corporation, Shenzhen 518057 (CN)
(72) Inventor: QIAN, Yongfu, Shenzhen Guangdong 518057 (CN)
(74) Representative: CMS Cameron McKenna Nabarro Olswang LLP
(86) International application number: PCT/CN2014/087613
(87) International publication number: WO 2015/176460

(56) References cited:
- WO-A1-2011/029355
- WO-A1-2013/054305
- WO-A1-2014/067348
- CN-A- 101 945 255
- CN-A- 101 945 255
- CN-A- 103 036 889
- US-A1- 2003 110 503
- US-A1- 2003 110 503
- US-A1- 2009 172 751
- US-A1- 2013 132 995
- US-A1- 2013 139 241
- US-A1- 2013 198 770
- ZELALEM SHIBESHI ET AL: "Using an RTSP proxy to implement the IPTV Media Function via a streaming server", ULTRA MODERN TELECOMMUNICATIONS AND CONTROL SYSTEMS AND WORKSHOPS (ICUMT), 2010 INTERNATIONAL CONGRESS ON, IEEE, PISCATAWAY, NJ, USA, 18 October 2010 (2010-10-18), pages 253-259, XP031841100, ISBN: 978-1-4244-7285-7
- SHIDDHARTHA RAJ BHANDARI ET AL: "Peer to Peer Proxy Based IPTV Services", GLOBECOM WORKSHOPS, 2009 IEEE, IEEE, PISCATAWAY, NJ, USA, 30 November 2009 (2009-11-30), pages 1-6, XP031585733, ISBN: 978-1-4244-5626-0

## Description

### Technical Field

The present disclosure relates to the technical field of Internet Protocol Televisions (IPTVs), and in particular, to a method and system for accessing a video, a set-top box, a proxy server and a media server.

### Background of the Related Art

With the rapid development of Internet and OTT video technology, the requirements of accessing an Over The Top (OTT) video by an IPTV set-top box have been normalized. But for now, there is a big gap between the hardware performance of a set-top box and the performance of a Personal Computer (PC), which leads to a big gap between the consumed time and the rendering effect when an IPTV set-top box directly accesses an OTT video in architecture in which the set-top box is directly connected to an OTT video server and the consumed time and the rendering effect when a PC accesses an OTT video. When an existing set-top box accesses an OTT video, those problems, for example, long response time required for accessing the OTT video, low performance of accessing the OTT video by the set-top box, and poor user experience, etc., may occur because of the limitation of the hardware performance of the set-top box itself.

The document US 2009/172751 A1 discloses an approach for presenting, via a set-top box, audio and/or video transmission to a user. An input is received from the user specifying media content that is accessible over a data network. The media content is retrieved over the data network, and presented via the set-top box.

The document WO 2014/067348 A1 discloses a media playing method and device, which can realize the separation of processing associated with personalized needs of a user from decoding and playing of media data. Said device comprises a media proxy service module and a playing module, the media proxy service module and the playing module are positioned in the same terminal or different terminals, wherein the media proxy service module is configured to: obtain media data according to the received playback command, preprocess the media data, send the playback control command to the playing module, and send the preprocessed media data to the playing module according to the request of the playing module; the playing module is configured to: request the media data from the media proxy service module according to the playback control command sent by the media proxy service module, and decode and play the media data.

The document US 2013/198770 A1 discloses a system and method which use an existing management server infrastructure to deliver video-on-demand or streaming content, including real-time live streaming. Existing client content playback devices, such as IPTVs, may be employed to stream content items, obtain advertisements, track user's viewing behaviors, and the like.

### Summary

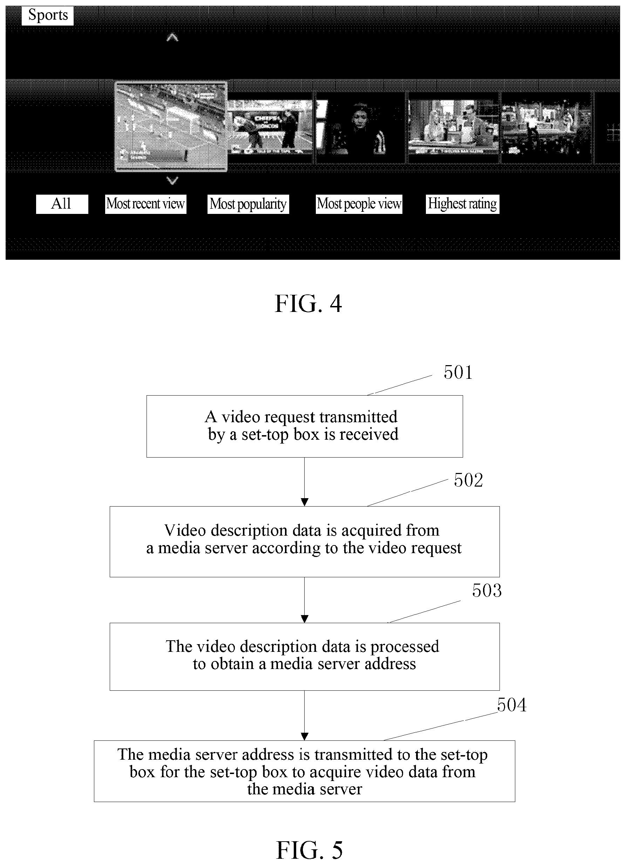

The present invention is defined in the independent claims. Enabling disclosure for the invention is found in the embodiment of Figures 5, 7 and 8. The remaining embodiments are to be understood as examples which do not describe parts of the present invention. Further improvements are provided in the dependent claims.

Also provided is a method for accessing a video, including the following steps:
transmitting a video request to a proxy server;
receiving a media server address transmitted by the proxy server, herein the media server address is obtained by the proxy server processing video description data acquired from the media server; and
acquiring video data from a corresponding media server according to the media server address.

Additionally, before transmitting the video request to the proxy server, the method further includes: transmitting a security protocol handshake request to the proxy server and receiving handshake success information returned by the proxy server.

The method further includes:
receiving video navigation interface information transmitted by the proxy server, herein the video navigation interface information is generated by the proxy server according to video classification information acquired from the media server;
transmitting the video navigation interface information to a display device for the display device to display a video navigation interface;
transmitting video type information selected by a user in the video navigation interface to the proxy server;
receiving video classification interface information transmitted by the proxy server, herein the video classification interface information is generated by the proxy server according to all video information included in the video type information acquired from the media server; and
transmitting the video classification interface information to the display device for the display device to display a video classification interface.

The step of transmitting a video request to a proxy server includes: transmitting the video request to the proxy server according to a video selection result of a user on the video classification interface.

Additionally the method for accessing a video, includes the steps of:
receiving a video request transmitted by a set-top box;
acquiring video description data from a media server according to the video request;
processing the video description data to obtain a media server address; and
transmitting the media server address to the set-top box for the set-top box to acquire video data by from the media server.

Alternatively, before transmitting the media server address to the set-top box, the method further includes:
judging whether the media server address is an encrypted address, and if the media server address is an encrypted address, decrypting the media server address.

Alternatively, the step of decrypting the media server address includes:
invoking an Application Program Interface (API) to decrypt the media server address.

Additionally, before the step of receiving a video request transmitted by a set-top box, the method further includes:
receiving a security protocol handshake request transmitted by the set-top box; and
negotiating with the set-top box according to the security protocol handshake request to establish a security communication channel, and returning handshake success information to the set-top box.

Additionally, the method further includes:
acquiring video classification information from the media server;
generating video navigation interface information according to the video classification information, and transmitting the video navigation interface information to the set-top box for by the set-top box to transmit the video navigation interface information to a display device for displaying;
receiving video type information selected by a user in a video navigation interface transmitted by the set-top box;
acquiring all video information included in the video type information from the media server; and
generating video classification interface information according to the acquired video information, and transmitting the video classification interface information to the set-top box for the set-top box to transmit the video classification interface information to the display device for displaying.

Also provided is a method for accessing a video, including steps of:
transmitting video description data to a proxy server for the proxy server to process the video description data to obtain a media server address and transmit the media server address to a set-top box; and
transmitting video data to the set-top box for the set-top box to play the video.

The method further includes:
transmitting video classification information to the proxy server for the proxy server to generate the video navigation interface information according to the video classification information and transmit the navigation interface information through the set-top box to a display device for displaying; and
transmitting all video information included in video type information selected by a user in a video navigation interface to the proxy server for the proxy server to generate video classification interface information according to the video information and transmit the video classification interface information through the set-top box to the display device for displaying.

Also provided is a set-top box, including a first transmission module, a first reception module and a video data acquisition module, herein
the first transmission module is arranged to transmit a video request to a proxy server;
the first reception module is arranged to receive a media server address transmitted by the proxy server, herein the media server address is obtained by the proxy server processing video description data acquired from the media server; and
the video data acquisition module is arranged to acquire video data from a corresponding media server according to the media server address.

Additionally, the set-top box further includes a second transmission module and a second reception module, herein
the second transmission module is arranged to transmit a security protocol handshake request to the proxy server before the first transmission module transmits the video request to the proxy server; and
the second reception module is arranged to receive handshake success information returned by the proxy server.

Additionally, the set-top box further includes a third transmission module and a third reception module, herein
the third reception module is arranged to receive video navigation interface information transmitted by the proxy server, herein the video navigation interface information is generated by the proxy server according to video classification information acquired from the media server; and receive video classification interface information transmitted by the proxy server, herein the video classification interface information is generated by the proxy server according to all video information included in the video type information acquired from the media server; and
the third transmission module is arranged to transmit the video navigation interface information to a display device for the display device to display a video navigation interface, transmit video type information selected by a user in the video navigation interface to the proxy server, and transmit the video classification interface information to the display device for the display device to display a video classification interface.

Additionally, the first transmission module is arranged to transmit the video request to the proxy server according to a video selection result of a user on the video classification interface.

Also provided is a proxy server, including a first reception module, a first acquisition module, a processing module and a first transmission module, herein
the first reception module is arranged to receive a video request transmitted by a set-top box;
the first acquisition module is arranged to acquire video description data from a media server according to the video request;
the processing module is arranged to process the video description data to obtain a media server address; and
the first transmission module is arranged to transmit the obtained media server address to the set-top box for the set-top box to acquire video data from the media server.

Additionally, the proxy server further includes a judgment module and a decryption module; herein
the judgment module is arranged to judge whether the media server address is an encrypted address before transmitting the media server address to the set-top box, and
the decryption module is arranged to decrypt the media server address to obtain an decrypted media server address in a case that the judgment module judges that the media server address is an encrypted address and wherein the decryption module is arranged to invoke an Application Program Interface (API) to decrypt the media server address.

Additionally, the proxy server further includes a second reception module and a negotiation module, herein
the second reception module is arranged to receive a security protocol handshake request transmitted by the set-top box before the first reception module receives the video request transmitted by the set-top box; and
the negotiation module is arranged to negotiate with the set-top box according to the security protocol handshake request to establish a security communication channel, and return handshake success information to the set-top box, alternatively the proxy server further includes a second acquisition module, an interface generation module, and a third reception module, herein
the second acquisition module is arranged to acquire video classification information from the media server;
the interface generation module is arranged to generate video navigation interface information according to the video classification information, transmit the video navigation interface information to the set-top box for the set-top box to transmit the video navigation interface information to a display device for displaying, generate video classification interface information according to the acquired video information, and transmit the video classification interface information to the set-top box for the set-top box to transmit the video classification interface information to the display device for displaying;
the third reception module is arranged to receive video type information selected by a user in a video navigation interface transmitted by the set-top box; and
the third acquisition module is arranged to acquire all video information included in the video type information from the media server.

Also provided is a media server, including a first transmission module and a second transmission module; herein
the first transmission module is arranged to transmit video description data to a proxy server for the proxy server to process the video description data to obtain a media server address and transmit the media server address to a set-top box; and
the second transmission module is arranged to transmit video data to the set-top box.

Further, the media server further includes a third transmission module; herein
the third transmission module is arranged to transmit video classification information to the proxy server for the proxy server to generate the video navigation interface information according to the video classification information and transmit the navigation interface information through the set-top box to a display device for displaying; and transmit all video information included in video type information selected by a user in a video navigation interface to the proxy server for the proxy server to generate video classification interface information according to the video information and transmit the video classification interface information through the set-top box to the display device for displaying.

Also provided is a system for accessing a video, including: the set-top box as described above, the proxy server as described above, and the media server as described above.

The beneficial effects of the present disclosure are as follows:
The present disclosure provides a method and system for accessing a video, a set-top box, a proxy server, and a media server, which can solve the problems of low performance of accessing a video by the set-top box and poor user experience. With the method and system for accessing a video, the set-top box, the proxy server and the media server according to the present disclosure, the proxy server between the set-top box and the media server is used to process video description data acquired from the media server to obtain a media server address for use by the set-top box to access video resources in the corresponding media server; in the present disclosure, part of work required to be implemented for accessing the video in the set-top box is handed over to the proxy server and is implemented by the proxy server; in this way, the workload of the set-top box can be reduced and the response time required for accessing the video by the set-top box can be shortened, thus enhancing the performance of accessing the video by the set-top box, and improving user experience.

Further, the method and system for accessing a video, the set-top box, the proxy server and the media server according to the present disclosure achieve customization of a User Interface (UI) using the proxy server, and can generate a personalized interface for accessing the video conforming to user requirements, thereby shortening the time consumed by a user to seek for the video and improving the user experience.

### Brief Description of Drawings

Fig. 1 is a flowchart of a method for accessing a video according to embodiment one of the present disclosure;
Fig. 2 is a flowchart of a set-top box and a proxy server cooperating to implement of an interface configuration in the method for accessing a video according to the embodiment one of the present disclosure;
Fig. 3 is a diagram of a video navigation interface according to the embodiment one of the present disclosure;
Fig. 4 is a diagram of a video classification interface according to the embodiment one of the present disclosure;
Fig. 5 is a flowchart of a method for accessing a video according to embodiment two of the present disclosure;
Fig. 6 is a flowchart of another method for accessing a video according to the embodiment two of the present disclosure;
Fig. 7 is a flowchart of configuring an interface by a proxy server according to the embodiment two of the present disclosure;
Fig. 8 is a flowchart of a method for accessing a video according to embodiment three of the present disclosure;
Fig. 9 is a structural diagram of a first set-top box according to embodiment four of the present disclosure;
Fig. 10 is a structural diagram of a second set-top box according to the embodiment four of the present disclosure;
Fig. 11 is a structural diagram of a third set-top box according to the embodiment four of the present disclosure;
Fig. 12 is a structural diagram of a first proxy server according to embodiment five of the present disclosure;
Fig. 13 is a structural diagram of a second proxy server according to the embodiment five of the present disclosure;
Fig. 14 is a structural diagram of a third proxy server according to the embodiment five of the present disclosure;
Fig. 15 is a structural diagram of a fourth proxy server according to the embodiment five of the present disclosure;
Fig. 16 is a structural diagram of a media server according to embodiment six of the present disclosure;
Fig. 17 is a structural diagram of another media server according to the embodiment six of the present disclosure;
Fig. 18 is a structural diagram of a system for accessing a video according to embodiment seven of the present disclosure;
Fig. 19 is a diagram of data communication of a system for accessing a video according to the embodiment seven of the present disclosure; and
Fig. 20 is a flowchart of an operation process of a system for accessing a video according to the embodiment seven of the present disclosure.

### Specific Embodiments

The present disclosure will be further described in detail below with reference to specific embodiments in combination with the accompanying drawings.

### Embodiment one:

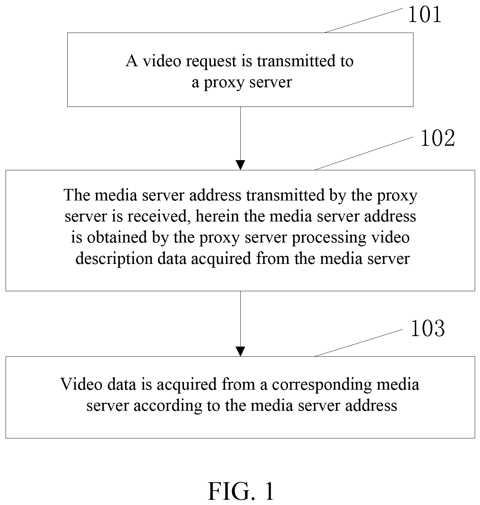

As shown in Fig. 1, the present embodiment provides a method for accessing a video, and an execution subject of the method is a set-top box. The method includes the following steps.

In step 101, a video request is transmitted to a proxy server.

Specifically, when a user selects a single video, the set-top box initiates the video request to the proxy server to acquire a media server address of the video.

In step 102, the media server address transmitted by the proxy server is received, herein the media server address is obtained by the proxy server processing video description data acquired from the media server.

Specifically, after the proxy server receives the video request initiated by the set-top box, the proxy server parses the video request, then transmits the video request to the media server according to a parsed result to acquire the video description data returned by the media server, and finally processes the video description data to obtain the media server address of the video and transmits the media server address to the set-top box.

In step 103, video data is acquired from a corresponding media server according to the media server address.

After receiving the media server address transmitted by the proxy server, the set-top box transmits the video request to the corresponding media server using the media server address to acquire the video data, and then plays the video after acquiring the video data.

Through a process of acquiring the media server address in the proxy server, the method for accessing a video according to the present embodiment can cut down the processing in the set-top box, thereby shortening the response time required for accessing the video by the set-top box, improving the performance of accessing the video by the set-top box, and enhancing the user experience.

In the existing video access architecture, the set-top box is in direct session communication with the Internet video server. Session processes of part of video websites are achieved through the https, and in this case, the safety factor is relatively high. Session processes of the remaining part of video websites are simply achieved through the http, and in this case, the safety factor is low, and there is a risk of leakage of user information during the session. Further, there are a lot of offensive software such as viruses, Trojans etc. on the Internet, but the set-top box has limited defense capability.

Considering the information security of the set-top box, in the method for accessing a video according to the present embodiment, a secure and reliable connection, i.e., a communication channel, can be established by negotiating with the proxy server through a security protocol before the video access starts, and the subsequent video access session processes are performed based on this connection. Before step 101, the method for accessing a video according to the present embodiment may further include: transmitting a security protocol handshake request to the proxy server and receiving handshake success information returned by the proxy server.

Alternatively, the set-top box establishes a reliable connection with the proxy server through an SSL handshake protocol; specifically, the set-top box firstly transmits an SSL handshake request to the proxy server, and then the proxy server performs an SSL negotiation process with the set-top box according to the SSL handshake request. After this process is completed, the proxy server returns SSL handshake success information to the set-top box, and subsequent communication processes between the set-top box and the proxy server will be performed on the security channel established through the SSL.

Information content in a webpage of an OTT video website is relatively complicated. For a PC, a user can easily and quickly locate content of interest to the user by moving a mouse. For a user of a set-top box, it is relatively difficult to locate content of interest to the user in a complex page through a remote control. Therefore, in the method for accessing a video according to the present embodiment, the proxy server can be used to customize a personalized interface for accessing the video conforming to user requirements.

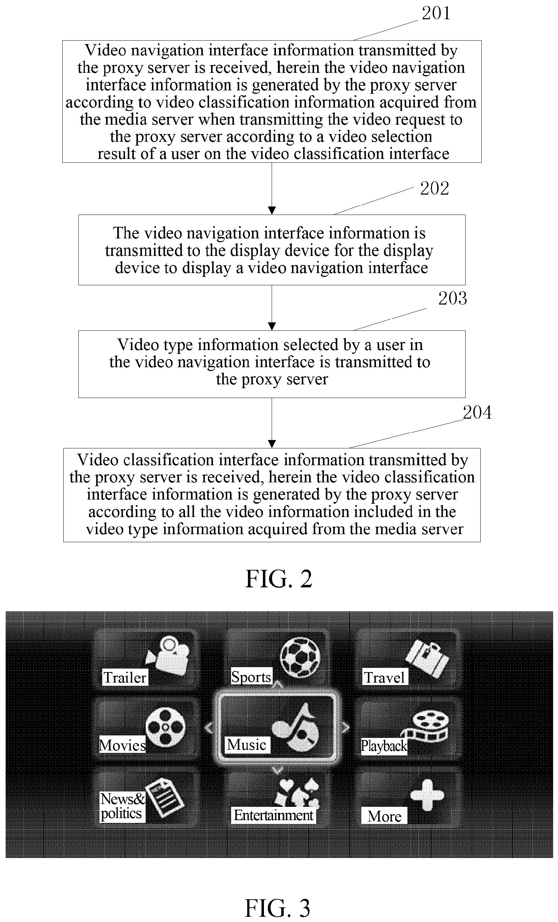

Specifically, on the basis of the above-described embodiment, as shown in Fig. 2, the method according to the present embodiment may further include the following steps.

In step 201, video navigation interface information transmitted by the proxy server is received, herein the video navigation interface information is generated by the proxy server according to video classification information acquired from the media server when transmitting the video request to the proxy server according to a video selection result of a user on the video classification interface.

In the method according to the present embodiment, the video navigation interface is generated by the proxy server acquiring the video classification information provided by the media server and is then transmitted to the set-top box for the set-top box to transmit the video navigation interface to a display device for displaying the video navigation interface; optionally, the display device is a television.

After the video navigation interface is displayed, the user can select a desired video in the video navigation interface through a remote control. Specifically, personalization of an effect presented by the video navigation interface can be customized according to information of the user requirements. As shown in Fig. 3, what is illustrated is a diagram of a video navigation interface according to the present embodiment.

In step 202, the video navigation interface information is transmitted to the display device for the display device to display a video navigation interface.

In step 203, video type information selected by a user in the video navigation interface is transmitted to the proxy server.

After the user selects a video type in the video navigation interface, the set-top box transmits information of the video type selected by the user to the proxy server. For example, if the user selects a music type video in the interface of Fig.3, the set-top box transmits the video type selected by the user to the proxy server for the proxy server to generate a video classification interface.

In step 204, video classification interface information transmitted by the proxy server is received, herein the video classification interface information is generated by the proxy server according to all the video information included in the video type information acquired from the media server.

Specifically, after receiving the video type information, the proxy server acquires all the video information included in the video type information, for example, all the video information related to the music, from the media server, then generates a video classification interface according to the video information, and transmits the video classification interface to the set-top box for the set-top box to transmit the video classification interface to the display device for displaying. With the method according to the present embodiment, videos can be sorted in the video classification interface according to strategies such as most recent updates, the most popularity, the highest rating, etc. First N videos are selected for displaying, and the remaining videos can be acquired by clicking on "MORE" to enter a video detailed list interface. As shown in Fig. 4, what is illustrated is a diagram of a video classification interface.

In step 205, the video classification interface information is transmitted to the display device for the display device to display a video classification interface.

With the method for accessing a video according to the present embodiment, a UI interface conforming to user requirements is customized by the proxy server; an interface provided by the media server (such as an OTT video server) is encapsulated by the UI interface, which is similar to a portal mode in design modes. The set-top box can access a particular video website only through the interface. In the present embodiment, the UI interface includes two layers, which are a video navigation layer and a video classification layer; the customized UI interface greatly simplifies the page according to the video classification information, and the user can firstly enter video classification of interest, and then find the video of interest to the user for playing in a list interface corresponding to the classification, thus shortening the time spent by the user on finding the video, and improving the user experience.

After the set-top box acquires the video classification interface of the proxy server parameter, a video required to be played can be selected on the video classification interface, and the set-top box transmits the video request to the proxy server according to a video selection result of a user on the video classification interface.

### Embodiment two:

As shown in Fig. 5, the present embodiment provides a method for accessing a video, and an execution subject of the method is a proxy server. The method may specifically include the following steps.

In step 501, a video request transmitted by a set-top box is received.

Specifically, in the present embodiment, a proxy server is used as an execution subject. Firstly, the proxy server receives the video request transmitted by the set-top box. After the user selects the video, the set-top box transmits the corresponding video request to the proxy server.

In step 502, video description data is acquired from a media server according to the video request.

Specifically, after receiving the video request, the proxy server parses the video request, and then initiates the video request to the media server. The proxy server receives video description data returned by the media server. Herein the video description data may include a video duration, a video URL address, a video preview picture, etc.

In step 503, the video description data is processed to obtain a media server address.

Specifically, the proxy server parses the video description data to extract a media server address of the video from the video description data, and then returns the media server address to the set-top box for the set-top box to access the media server to acquire video resources for subsequently playing.

In step 504, the media server address is transmitted to the set-top box for the set-top box to acquire video data from the media server.

The method for accessing a video according to the present embodiment uses the proxy server to complete part of work which is previously processed by the set-top box. Specifically, the proxy server processes the video data to obtain the media server address. The method for accessing a video according to the present embodiment can reduce the workload of the set-top box, and shorten the response time required by the set-top box to access the video, thereby enhancing the performance of accessing the video by the set-top box and improving the user experience.

Currently, OTT video websites can be divided into two categories. One category is ordinary video websites, such as the domestic Youku, Tudou, etc. After a user clicks on a video, an OTT video website will directly provide a media server address corresponding to the video. The other category is a cryptographic category of video websites, such as foreign YOUTUBE, etc. After a user clicks on a video, a video website needs to invoke a special API library for decryption to obtain a real media server address, and the decryption process is relatively time-consuming. Therefore, before transmitting the media server address to the set-top box in step 504, the method according to the present embodiment may further include judging whether the media server address is an encrypted address, and if so, decrypting the media server address.

Alternatively, in the method according to the present embodiment, the proxy server invokes the API to decrypt the media server address.

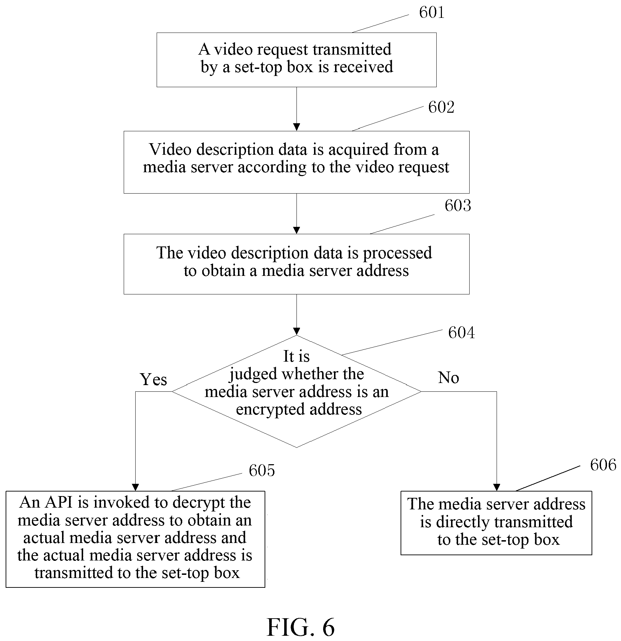

In the method according to the present embodiment, the proxy server can perform different processing operations for two cases when the set-top box requests for a video. For an ordinary video website, the proxy server only needs to analyze and simplify the data returned by the OTT video server, extract the address information of the video media server therefrom, and transmit the address information to the set-top box. For a cryptographic category of video website, the proxy server firstly extracts the encrypted address information of the video media server from the data returned by the OTT video website, then decrypts the address information by invoking the API library provided by the website, and returns the real video media server address obtained through decryption to the set-top box. As shown in Fig. 6, the method for accessing a video according to the present embodiment may specifically include the following steps.

In step 601, a video request transmitted by a set-top box is received.

In step 602, video description data is acquired from a media server according to the video request.

In step 603, the video description data is processed to obtain a media server address.

Specifically, the video description data is parsed to obtain the media server address returned by the media server from the video description data.

In step 604, it is judged whether the media server address is an encrypted address, and if so, step 605 is performed; and if not, step 606 is performed.

Specifically, it is possible to judge whether a media server address is an encrypted address by judging whether a video website accessed by the set-top box is an encrypted website, if the video website is an encrypted website, it is determined that the obtained media server address is an encrypted address; and if the video website is not an encrypted website, it is determined that the obtained media server address is not an encrypted address.

In step 605, an API is invoked to decrypt the media server address to obtain an actual media server address, and the actual media server address is transmitted to the set-top box.

The proxy server invokes the API provided by the website and decrypts the encrypted URL information to obtain the media server address. If the API is stored in the proxy server, the proxy server invokes the API directly; otherwise, a request needs to be initiated to the video website provided by the media server to acquire the API.

In step 606, the media server address is directly transmitted to the set-top box.

In consideration of information security in the process of accessing the video, before the step 501 or step 601 described above, the method for accessing a video according to the present embodiment may further include: receiving a security protocol handshake request transmitted by the set-top box; and negotiating with the set-top box according to the security protocol handshake request to establish a security communication channel, and returning handshake success information to the set-top box.

In the method according to the present embodiment, the proxy server may negotiate with the set-top box through a security protocol to establish a security channel, and subsequent video access sessions are performed on the security channel. Alternatively, the security protocol is the SSL.

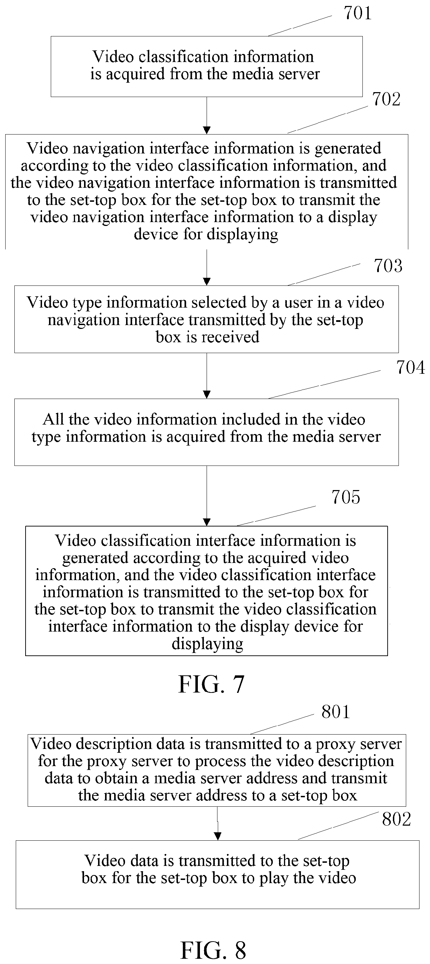

Information content in a webpage of a video website is relatively complicated. For a PC, a user can easily and quickly locate content of interest to the user by moving a mouse. For a user of a set-top box, it is relatively difficult to locate content of interest to the user in a complex page through a remote control. Therefore, in the method for accessing a video according to the present embodiment, the proxy server can be used to customize a personalized interface for accessing the video conforming to user requirements. As shown in Fig. 7, on the basis of the above-described technical solutions, the method for accessing a video according to the present embodiment may further include the following steps.

In step 701, video classification information is acquired from the media server.

In the method according to the present embodiment, the proxy server may acquire the video classification information in the video website provided by the media server, for example, sports videos, music videos, etc.

In step 702, video navigation interface information is generated according to the video classification information, and the video navigation interface information is transmitted to the set-top box for the set-top box to transmit the video navigation interface information to a display device for displaying.

Specifically, the proxy server may generate a video navigation interface according to the video classification information, for example, determining a layout style in the video navigation interface and displaying of various classification items. Herein, personalization of an effect presented by the video navigation interface can be customized according to information of user requirements. Please refer to the interface shown in Fig. 3.

In step 703, video type information selected by a user in a video navigation interface transmitted by the set-top box is received.

The user selects a required video type option by entering the video navigation interface deployed by the proxy server through the set-top box. The set-top box transmits the video type information selected by the user to the proxy server for the proxy server to generate the next level of video classification interface, for example, a video list interface.

In step 704, all the video information included in the video type information is acquired from the media server.

Specifically, after receiving the video type information, the proxy server acquires all the video information included in the video type information from the media server, for example, acquiring information of all videos included in the sports videos.

In step 705, video classification interface information is generated according to the acquired video information, and the video classification interface information is transmitted to the set-top box for the set-top box to transmit the video classification interface information to the display device for displaying.

After receiving all the video information of a certain type provided by the media server, the proxy server forms a video classification interface according to the video information. For example, the video interface is presented in a horizontal list form. Alternatively, the proxy server may further sort a variety of video information according to a certain rule. For example, the videos are sorted according to strategies such as the most recent updates, the most popularity, the highest rating, etc., and first N videos are selected for presentation.

In the method for accessing a video according to the present embodiment, the proxy server can encapsulate the interface provided by the media server to form a UI interface conforming to user requirements, and can also configure a presentation effect of the UI interface according to the user requirements. The method for accessing a video according to the present embodiment shortens the time spent by the user on finding the video and improves the user experience.

### Embodiment three:

As shown in Fig. 8, the present embodiment provides a method for accessing a video, and an execution subject of the method is a media server. The method may specifically include the following steps.

In step 801, video description data is transmitted to a proxy server for the proxy server to process the video description data to obtain a media server address and transmit the media server address to a set-top box.

Specifically, after receiving the video request initiated by the proxy server, the media server transmits the video description data to the proxy server for the proxy server to process the video description data to obtain a media server address and transmit the media server address to a set-top box.

In step 802, video data is transmitted to the set-top box for the set-top box to play the video.

Specifically, after receiving the video request initiated by the set-top box, the media server transmits the corresponding video data to the set-top box for the set-top box to play the video.

The method for accessing a video according to the present embodiment uses the proxy server to complete part of work which is previously processed by the set-top box. Specifically, the proxy server processes the video data to obtain the media server address. The method for accessing a video according to the present embodiment can reduce the workload of the set-top box, and shorten the response time required by the set-top box to access the video, thereby enhancing the performance of accessing the video by the set-top box and improving the user experience.

On the basis of the above-described technical solutions, the method according to the present embodiment further includes:
transmitting video classification information to the proxy server for the proxy server to generate the video navigation interface information according to the video classification information and transmit the navigation interface information through the set-top box to a display device for displaying; and
transmitting all the video information included in video type information selected by a user in a video navigation interface to the proxy server for the proxy server to generate video classification interface information according to the video information and transmit the video classification interface information through the set-top box to the display device for displaying.

A person having ordinary skill in the art can understand that all or part of the steps for achieving the aforementioned method embodiments can be implemented by a program instructing related hardware, and the previously mentioned program can be stored in a computer readable storage medium, and when the program is executed, the steps of the method embodiments are performed. The storage medium described above includes various media which can store program codes, such as a ROM, a RAM, a magnetic disk or an optical disk, etc.

### Embodiment four:

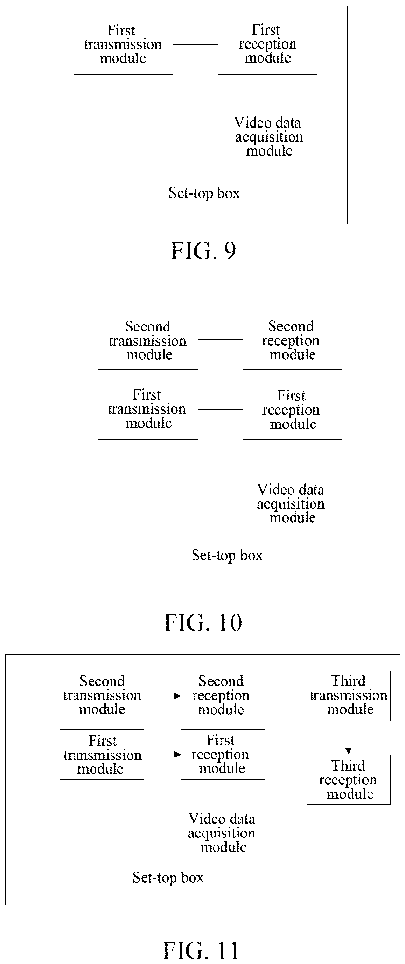

As shown in Fig. 9, the present embodiment provides a set-top box, including a first transmission module, a first reception module and a video data acquisition module; herein
the first transmission module is arranged to transmit a video request to a proxy server;
the first reception module is arranged to receive a media server address transmitted by the proxy server, herein the media server address is obtained by the proxy server through processing video description data acquired from the media server; and
the video data acquisition module is arranged to acquire video data from a corresponding media server according to the media server address.

The part of work required for accessing the video can be handed over by the set-top box according to the present embodiment to the proxy server and is implemented by the proxy server. In this way, the response time required for accessing the video by the set-top box can be shortened, thus enhancing the performance of the set-top box, and improving the user experience.

On the basis of the above-described technical solutions, in an alternative solution, the set-top box as shown in Fig. 10 may further include a second transmission module and a second reception module, herein
the second transmission module is arranged to transmit a security protocol handshake request to the proxy server before the first transmission module transmits the video request to the proxy server; and
the second reception module is arranged to receive handshake success information returned by the proxy server.

The set-top box according to the present embodiment can establish a secure data transmission channel before accessing the video, which ensures data security.

On the basis of the above-described technical solutions, in an alternative solution, the set-top box as shown in Fig. 11 may further include a third transmission module and a third reception module, herein
the third reception module is arranged to receive video navigation interface information transmitted by the proxy server, herein the video navigation interface information is generated by the proxy server according to video classification information acquired from the media server; and receive video classification interface information transmitted by the proxy server, herein the video classification interface information is generated by the proxy server according to all the video information included in the video type information acquired from the media server; and
the third transmission module is arranged to transmit the video navigation interface information to a display device for the display device to display a video navigation interface, transmit video type information selected by a user in the video navigation interface to the proxy server, and transmit the video classification interface information to the display device for the display device to display a video classification interface.

The set-top box according to the present embodiment can cooperate with the proxy server to configure a UI interface conforming to user requirements through the proxy server, thereby shortening the time for the user to find the video and improving the user experience.

On the basis of the above-described technical solutions, the first transmission module is arranged to transmit the video request to the proxy server according to a video selection result of a user on the video classification interface.

The procedure of accessing the video by the set-top box in the present embodiment is the same as that of the above-described embodiment one, and details thereof can be known with reference to the related description of the above embodiment, which will not be repeated here.

### Embodiment five:

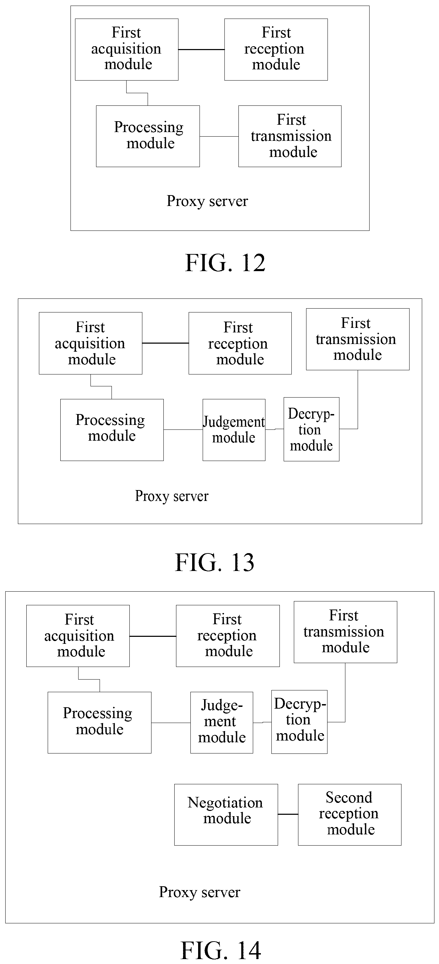

As shown in Fig. 12, the present embodiment provides a proxy server, including a first reception module, a first acquisition module, a processing module and a first transmission module, herein
the first reception module is arranged to receive a video request transmitted by a set-top box;
the first acquisition module is arranged to acquire video description data from a media server according to the video request;
the processing module is arranged to process the video description data to obtain a media server address; and
the first transmission module is arranged to transmit the obtained media server address to the set-top box for the set-top box to acquire video data from the media server.

The proxy server according to the present embodiment can complete part of work which is previously processed by the set-top box. Specifically, the proxy server processes the video data to obtain the media server address. The method for accessing a video according to the present embodiment can reduce the workload of the set-top box, and shorten the response time required by the set-top box to access the video, thereby enhancing the performance of accessing the video by the set-top box and improving the user experience.

On the basis of the above-described technical solutions, in an alternative solution, the proxy server as shown in Fig. 13 further includes a judgment module and a decryption module, herein the judgment module is arranged to judge whether the media server address is an encrypted address before transmitting the media server address to the set-top box; the decryption module is arranged to decrypt the media server address to obtain an decrypted media server address in a case that the judgment module judges that the media server address is an encrypted address.

Alternatively, the decryption module is arranged to invoke an Application Program Interface (API) to decrypt the media server address.

The proxy server according to the present embodiment can acquire the real media server address from the encrypted media server address. For a cryptographic category of video website, the proxy server firstly extracts the encrypted address information of the video media server from the data returned by the OTT video website, then decrypts the address information by invoking the API library provided by the website, and returns the real video media server address obtained through decryption to the set-top box. For an ordinary video website, the proxy server directly processes the video description data to obtain a media server address and transmits the media service address to the set-top box for the set-top box to access the media server.

On the basis of the above-described technical solutions, in an alternative solution, the proxy server as shown in Fig. 14 further includes a second reception module and a negotiation module, herein
the second reception module is arranged to receive a security protocol handshake request transmitted by the set-top box before the first reception module receives the video request transmitted by the set-top box; and
the negotiation module is arranged to negotiate with the set-top box according to the security protocol handshake request to establish a security communication channel, and return handshake success information to the set-top box.

The proxy server according to the present embodiment can negotiate a security protocol with the set-top box to establish a secure channel, and subsequent video access sessions are performed on the secure channel to ensure the security of data transmission. Alternatively, the security protocol is the SSL.

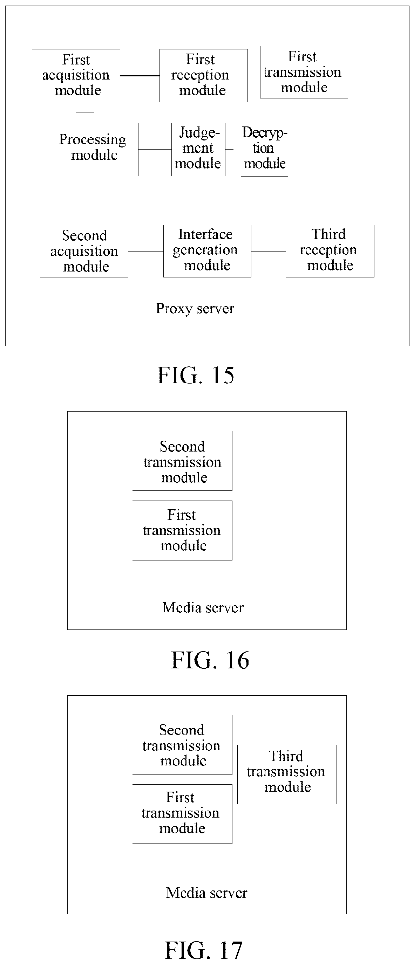

On the basis of the above-described technical solutions, in an alternative solution, the proxy server as shown in Fig. 15 further includes a second acquisition module, an interface generation module, and a third reception module, herein
the second acquisition module is arranged to acquire video classification information from the media server;
the interface generation module is arranged to generate video navigation interface information according to the video classification information, transmit the video navigation interface information to the set-top box for the set-top box to transmit the video navigation interface information to a display device for displaying, generate video classification interface information according to the acquired video information, and transmit the video classification interface information to the set-top box for the set-top box transmit the video classification interface information to the display device for displaying;
the third reception module is arranged to receive video type information selected by a user in a video navigation interface transmitted by the set-top box; and
the third acquisition module is arranged to acquire all the video information included in the video type information from the media server.

The proxy server according to the present embodiment can encapsulate the interface provided by the media server to form a UI interface conforming to user requirements, and can also configure a presentation effect of the UI interface according to the user requirements. The method for accessing a video according to the present embodiment shortens the time spent by the user on finding the video and improves the user experience.

The procedure of accessing the video by the proxy server in the present embodiment is the same as that of the above-described embodiment two, and specific steps can be known with reference to the specific description in the above embodiment two.

### Embodiment six:

As shown in Fig. 16, the present embodiment provides a media server, including a first transmission module and a second transmission module, herein
the first transmission module is arranged to transmit video description data to a proxy server for the proxy server to process the video description data to obtain a media server address and transmit the media server address to a set-top box; and
the second transmission module is arranged to transmit video data to the set-top box.

The media server according to the present embodiment can cooperate with the proxy server to complete part of work which is previously processed by the set-top box through the proxy server. Specifically, the proxy server processes the video data to obtain the media server address. The method for accessing a video according to the present embodiment can reduce the workload of the set-top box, and shorten the response time required by the set-top box to access the video, thereby enhancing the performance of accessing the video by the set-top box and improving the user experience.

On the basis of the above-described technical solutions, in an alternative solution, the media server as shown in Fig. 17 further includes a third transmission module;
herein the third transmission module is arranged to transmit video classification information to the proxy server for the proxy server to generate the video navigation interface information according to the video classification information and transmit the navigation interface information through the set-top box to a display device for displaying; and transmit all the video information included in video type information selected by a user in a video navigation interface to the proxy server for the proxy server to generate video classification interface information according to the video information and transmit the video classification interface information through the set-top box to the display device for displaying.

The media server according to the present embodiment cooperates with the proxy server so that the proxy server can configure a UI interface conforming to user requirements and enhance the user experience.

### Embodiment seven:

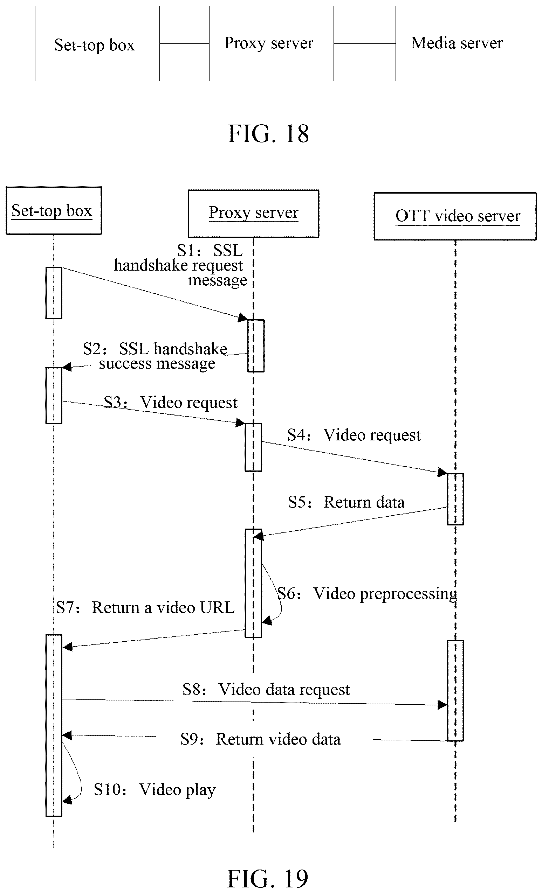

As shown in Fig. 18, the present embodiment provides a system for accessing a video, including: the set-top box according to the above-described embodiment one, the proxy server according to the above-described embodiment two, and the media server according to the above-described embodiment three.

A communication process of the system for accessing a video according to the present embodiment will be described in detail below by taking the media server being an OTT video server as an example, as shown in Fig. 19.

In step S1, after the set-top box is powered on, the set-top box transmits SSL handshake request connection information to the proxy server.

In step S2, an SSL negotiation process between the set-top box and the proxy server is completed, and the proxy server returns SSL handshake success information to the set-top box. Subsequent communication processes between the set-top box and the proxy server will be performed on a secure channel established through the SSL.

In step S3, after the set-top box enters a user-customized UI template deployed by the proxy server, a single video is clicked on to transmit a video request to the proxy server.

Here, the UI template is a UI interface template generated by the proxy server in the above-described second embodiment.

In step S4, after receiving the video request information from the set-top box, the proxy server initiates a video information request to an OTT video server according to the request information.

In step S5, the OTT video server receives the video information request from the proxy server and returns video description data, which includes a video duration, a video URL address, a video preview picture etc.

In step S6, the proxy server receives data returned by the OTT video server, and preprocesses the returned video data to obtain media server address information of the video.

In step S7, the proxy server returns the media server address information of the video to the set-top box.

In step S8, the set-top box receives the video media server address returned by the proxy server.

A media data request is initiated to the media server.

In step S9, the media server receives request information from the set-top box and returns video data to the set-top box.

In step S10, after the set-top box receives the video data returned by the video server, the set-top box starts playing the video.

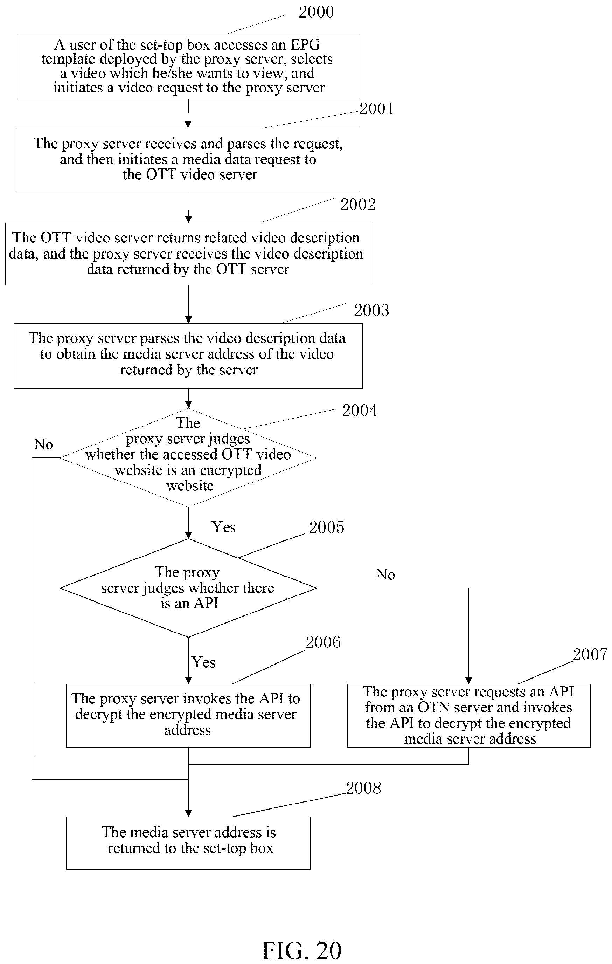

As video websites which are currently provided by the media server include encrypted websites and ordinary websites, when the media server returns an encrypted media server address, it needs to decode for the media server to obtain the real media server address; the system for accessing a video according to the embodiment is applicable to both conditions described above, i.e., an encrypted condition and an unencrypted condition; as shown in Fig. 20, the specific operation process of the system according to the present embodiment includes the following steps.

In step 2000, a user of the set-top box accesses an EPG template deployed by the proxy server, selects a video which he/she wants to view, and initiates a video request to the proxy server.

In step 2001, the proxy server receives and parses the request, and then initiates a media data request to the OTT video server.

In step 2002, the OTT video server returns related video description data, and the proxy server receives the video description data returned by the OTT server.

In step 2003, the proxy server parses the video description data to obtain the media server address of the video returned by the server.

In step 2004, the proxy server judges whether the accessed OTT video website is an encrypted website, and if so, step 2005 is performed; otherwise, step 2008 is performed.

In step 2005, the proxy server judges whether there is an API, and if so, step 2006 is performed; otherwise, step 2007 is performed.

In step 2006, the proxy server invokes the API to decrypt the encrypted media server address, and the process proceeds to step 2008.

In step 2007, the proxy server requests an API from an OTN server and invokes the API to decrypt the encrypted media server address.

In step 2008, the media server address is returned to the set-top box.

The system according to the present embodiment may apply to ordinary video websites and encrypted video websites, and the video description data returned by the media server is processed by the proxy server to obtain the media server address, the processing which is previously completed by the set-top box is handed over to be performed in the proxy server, which can reduce the workload of the set-top box, and shorten the response time required by the set-top box to access the video, thereby improving the performance of accessing the video by the set-top box and enhancing the user experience.

### Industrial applicability

As described above, the method and system for accessing a video, the set-top box, the proxy server and the media server according to the embodiments of the present disclosure have the following beneficial effects: part of work required to be implemented for accessing the video in the set-top box is handed over to the proxy server and is implemented by the proxy server. In this way, the workload of the set-top box can be reduced and the response time required for accessing the video by the set-top box can be shortened, thus enhancing the performance of accessing the video by the set-top box, and improving user experience.

## Claims

1. A method for accessing a video, **characterized by** comprising the following steps:
transmitting (101), by a set-top box, a video request to a proxy server;
receiving (102), by the set-top box, a media server address transmitted by the proxy server, wherein the media server address is obtained by the proxy server processing video description data acquired from the media server; and
acquiring (103), by the set-top box, video data from the media server according to the media server address;
wherein the method further comprises:
receiving (201), by the set-top box, video navigation interface information transmitted by the proxy server, wherein the video navigation interface information is generated by the proxy server according to video classification information acquired from the media server;
transmitting (202), by the set-top box, the video navigation interface information to a display device for the display device to display a video navigation interface;
transmitting (203), by the set-top box, video type information selected by a user in the video navigation interface to the proxy server;
receiving (204), by the set-top box, video classification interface information transmitted by the proxy server, wherein the video classification interface information is generated by the proxy server according to all video information included in the video type information acquired from the media server; and
transmitting (705), by the set-top box, the video classification interface information to the display device for the display device to display a video classification interface, and,
wherein the step of transmitting, by the set-top box, the video request to the proxy server comprises: transmitting (501), by the set-top box, the video request to the proxy server according to a video selection result of the user on the video classification interface;
wherein the method further comprises:
transmitting (801), by the media server, the video description data to the proxy server for the proxy server to process the video description data to obtain the media server address and transmit the media server address to the set-top box; and
transmitting (802), by the media server, the video data to the set-top box for the set-top box to play the video;
wherein the method further comprises:
transmitting (703), by the media server, the video classification information to the proxy server for the proxy server to generate the video navigation interface information according to the video classification information and transmit the video navigation interface information through the set-top box to the display device for displaying; and
transmitting (704), by the media server, the all video information included in the video type information selected by the user in the video navigation interface to the proxy server for the proxy server to generate the video classification interface information according to the all video information and transmit the video classification interface information through the set-top box to the display device for displaying.

2. The method for accessing a video according to claim 1, wherein before transmitting, by the set-top box, the video request to the proxy server, the method further comprises:
transmitting, by the set-top box, a security protocol handshake request to the proxy server and receiving, by the set-top box, handshake success information returned by the proxy server.

3. The method for accessing a video according to claim 1, further comprising the following steps:
receiving, by the proxy server, the video request transmitted by the set-top box;
acquiring, by the proxy server, the video description data from the media server according to the video request;
processing, by the proxy server, the video description data to obtain the media server address; and
transmitting, by the proxy server, the media server address to the set-top box for the set-top box to acquire the video data from the media server.

4. The method for accessing a video according to claim 3, wherein before transmitting, by the proxy server, the media server address to the set-top box, the method further comprises:
judging, by the proxy server, whether the media server address is an encrypted address, and if the media server address is an encrypted address, decrypting, by the proxy server, the media server address,
and,
wherein the step of decrypting, by the proxy server, the media server address comprises:
invoking, by the proxy server, an Application Program Interface API to decrypt the media server address.

5. The method for accessing a video according to claim 3, wherein before the step of receiving, by the proxy server, the video request transmitted by the set-top box, the method further comprises:
receiving, by the proxy server, a security protocol handshake request transmitted by the set-top box; and
negotiating, by the proxy server, with the set-top box according to the security protocol handshake request to establish a security communication channel, and returning, by the proxy server, handshake success information to the set-top box,
or,
wherein the method further comprises:
acquiring, by the proxy server, the video classification information from the media server;
generating, by the proxy server, the video navigation interface information according to the video classification information, and transmitting the video navigation interface information to the set-top box for the set-top box to transmit the video navigation interface information to the display device for displaying;
receiving, by the proxy server, the video type information selected by the user in the video navigation interface transmitted by the set-top box;
acquiring, by the proxy server, the all video information included in the video type information from the media server; and
generating, by the proxy server, the video classification interface information according to the acquired video information, and transmitting the video classification interface information to the set-top box for the set-top box to transmit the video classification interface information to the display device for displaying.

6. A system for accessing a video, comprising: a set-top box, a proxy server, and a media server, **characterized in that**
the set-top box comprises a first transmission module, a first reception module and a video data acquisition module, wherein
the first transmission module of the set-top box is arranged to transmit a video request to the proxy server;
the first reception module of the set-top box is arranged to receive a media server address transmitted by the proxy server, wherein the media server address is obtained by the proxy server processing video description data acquired from the media server; and
the video data acquisition module of the set-top box is arranged to acquire video data from the media server according to the media server address;
wherein the set-top box further comprises a third transmission module and a third reception module, wherein
the third reception module of the set-top box is arranged to receive video navigation interface information transmitted by the proxy server, wherein the video navigation interface information is generated by the proxy server according to video classification information acquired from the media server; and receive video classification interface information transmitted by the proxy server, wherein the video classification interface information is generated by the proxy server according to all video information included in video type information acquired from the media server; and
the third transmission module of the set-top box is arranged to transmit the video navigation interface information to a display device for the display device to display a video navigation interface, transmit the video type information selected by a user in the video navigation interface to the proxy server, and transmit the video classification interface information to the display device for the display device to display a video classification interface,
and,
wherein the first transmission module of the set-top box is arranged to transmit the video request to the proxy server according to a video selection result of the user on the video classification interface;
wherein the media server comprises a first transmission module and a second transmission module, wherein
the first transmission module of the media server is arranged to transmit the video description data to the proxy server for the proxy server to process the video description data to obtain the media server address and transmit the media server address to the set-top box; and
the second transmission module of the media server is arranged to transmit the video data to the set-top box;
wherein the media server further comprises a third transmission module;
the third transmission module of the media server is arranged to transmit the video classification information to the proxy server for the proxy server to generate the video navigation interface information according to the video classification information and transmit the video navigation interface information through the set-top box to the display device for displaying; and transmit the all video information included in the video type information selected by the user in the video navigation interface to the proxy server for the proxy server to generate the video classification interface information according to the all video information and transmit the video classification interface information through the set-top box to the display device for displaying.

7. The system for accessing a video according to claim 6, wherein the set-top box further comprises a second transmission module and a second reception module, wherein
the second transmission module of the set-top box is arranged to transmit a security protocol handshake request to the proxy server before the first transmission module of the set-top box transmits the video request to the proxy server; and
the second reception module of the set-top box is arranged to receive handshake success information returned by the proxy server.

8. The system for accessing a video according to claim 6, wherein the proxy server comprises a first reception module, a first acquisition module, a processing module and a first transmission module, wherein
the first reception module of the proxy server is arranged to receive the video request transmitted by the set-top box;
the first acquisition module of the proxy server is arranged to acquire the video description data from the media server according to the video request;
the processing module of the proxy server is arranged to process the video description data to obtain the media server address; and
the first transmission module of the proxy server is arranged to transmit the obtained media server address to the set-top box for the set-top box to acquire the video data from the media server.

9. The system for accessing a video according to claim 8, wherein the proxy server further comprises a judgment module and a decryption module, wherein
the judgment module of the proxy server is arranged to judge whether the media server address is an encrypted address before transmitting the media server address to the set-top box, and
the decryption module of the proxy server is arranged to decrypt the media server address to obtain an decrypted media server address in a case that the judgment module of the proxy server judges that the media server address is an encrypted address,
and,
wherein the decryption module of the proxy server is arranged to invoke an Application Program Interface API to decrypt the media server address.

10. The system for accessing a video according to claim 8, wherein the proxy server further comprises a second reception module and a negotiation module, wherein
the second reception module of the proxy server is arranged to receive a security protocol handshake request transmitted by the set-top box before the first reception module of the proxy server receives the video request transmitted by the set-top box; and
the negotiation module of the proxy server is arranged to negotiate with the set-top box according to the security protocol handshake request to establish a security communication channel, and return handshake success information to the set-top box,
or,
wherein the proxy server further comprises a second acquisition module, an interface generation module, and a third reception module, wherein
the second acquisition module of the proxy server is arranged to acquire the video classification information from the media server;
the interface generation module of the proxy server is arranged to generate the video navigation interface information according to the video classification information, transmit the video navigation interface information to the set-top box for the set-top box to transmit the video navigation interface information to the display device for displaying, generate the video classification interface information according to the all video information included in the video type information acquired from the media server, and transmit the video classification interface information to the set-top box for the set-top box to transmit the video classification interface information to the display device for displaying;
the third reception module of the proxy server is arranged to receive the video type information selected by the user in the video navigation interface transmitted by the set-top box; and
the third acquisition module of the proxy server is arranged to acquire the all video information included in the video type information from the media server.

## Patentansprüche

1. Verfahren zum Zugreifen auf ein Video, **dadurch gekennzeichnet, dass** es die folgenden Schritte umfasst:
Übertragen (101), durch eine Set-Top-Box, einer Videoanfrage an einen Proxy-Server;
Empfangen (102), durch die Set-Top-Box, einer Medienserveradresse, die durch den Proxy-Server übertragen wird, wobei die Medienserveradresse durch den Proxy-Server erhalten wird, der Videobeschreibungsdaten verarbeitet, die von dem Medienserver erlangt werden; und
Erlangen (103), durch die Set-Top-Box, von Videodaten von dem Medienserver gemäß der Medienserveradresse;
wobei das Verfahren weiter umfasst:
Empfangen (201), durch die Set-Top-Box, von Videonavigationsschnittstelleninformationen, die durch den Proxy-Server übertragen werden, wobei die Videonavigationsschnittstelleninformationen durch den Proxy-Server gemäß Videoklassifizierungsinformationen erzeugt werden, die von dem Medienserver erlangt werden;
Übertragen (202), durch die Set-Top-Box, der Videonavigationsschnittstelleninformationen an eine Anzeigevorrichtung, damit die Anzeigevorrichtung eine Videonavigationsschnittstelle anzeigt;
Übertragen (203), durch die Set-Top-Box, von Videotypinformationen, die von einem Anwender in der Videonavigationsschnittstelle ausgewählt werden, an den Proxy-Server;
Empfangen (204), durch die Set-Top-Box, von Videoklassifizierungsschnittstelleninformationen, die durch den Proxy-Server übertragen werden, wobei die Videoklassifizierungsschnittstelleninformationen durch den Proxy-Server gemäß allen Videoinformationen erzeugt werden, die in den Videotypinformationen beinhaltet sind, die von dem Medienserver erlangt werden; und
Übertragen (705), durch die Set-Top-Box, der Videoklassifizierungsschnittstelleninformationen an die Anzeigevorrichtung zur Anzeige einer Videoklassifizierungsschnittstelle, und
wobei der Schritt des Übertragens, durch die Set-Top-Box, der Videoanfrage an den Proxy-Server umfasst:
Übertragen (501), durch die Set-Top-Box, der Videoanfrage an den Proxy-Server gemäß einem Videoauswahlergebnis des Anwenders auf der Videoklassifizierungsschnittstelle;
wobei das Verfahren weiter umfasst:
Übertragen (801), durch den Medienserver, der Videobeschreibungsdaten an den Proxy-Server, damit der Proxy-Server die Videobeschreibungsdaten verarbeitet, um die Medienserveradresse zu erhalten, und die Medienserveradresse an die Set-Top-Box überträgt; und
Übertragen (802), durch den Medienserver, der Videodaten an die Set-Top-Box, damit die Set-Top-Box das Video abspielt;
wobei das Verfahren weiter umfasst:
Übertragen (703), durch den Medienserver, der Videoklassifizierungsinformationen an den Proxy-Server, damit der Proxy-Server die Videonavigationsschnittstelleninformationen gemäß den Videoklassifizierungsinformationen erzeugt und die Videonavigationsschnittstelleninformationen durch die Set-Top-Box an die Anzeigevorrichtung zur Anzeige überträgt; und
Übertragen (704), durch den Medienserver, aller Videoinformationen, die in den Videotypinformationen beinhaltet sind, die durch den Anwender in der Videonavigationsschnittstelle ausgewählt wurden, an den Proxy-Server, damit der Proxy-Server die Videoklassifizierungsschnittstelleninformationen gemäß allen Videoinformationen erzeugt und die Videoklassifizierungsschnittstelleninformationen durch die Set-Top-Box an die Anzeigevorrichtung zur Anzeige überträgt.

2. Verfahren zum Zugreifen auf ein Video nach Anspruch 1, wobei vor Übertragen, durch die Set-Top-Box, der Videoanfrage an den Proxy-Server das Verfahren weiter umfasst:
Übertragen, durch die Set-Top-Box, einer Sicherheitsprotokollübergabeanfrage an den Proxy-Server und Empfangen, durch die Set-Top-Box, von Übergabeerfolgsinformationen, die durch den Proxy-Server zurückgeleitet werden.

3. Verfahren zum Zugreifen auf ein Video nach Anspruch 1, weiter die folgenden Schritte umfassend:
Empfangen, durch den Proxy-Server, der durch die Set-Top-Box übertragenen Videoanfrage;
Erlangen, durch den Proxy-Server, der Videobeschreibungsdaten von dem Medienserver gemäß der Videoanfrage;
Verarbeiten, durch den Proxy-Server, der Videobeschreibungsdaten, um die Medienserveradresse zu erhalten; und
Übertragen, durch den Proxy-Server, der Medienserveradresse an die Set-Top-Box, damit die Set-Top-Box die Videodaten von dem Medienserver erlangt.

4. Verfahren zum Zugreifen auf ein Video nach Anspruch 3, wobei vor Übertragen, durch den Proxy-Server, der Medienserveradresse an die Set-Top-Box das Verfahren weiter umfasst:
Beurteilen, durch den Proxy-Server, ob die Medienserveradresse eine verschlüsselte Adresse ist, und wenn die Medienserveradresse eine verschlüsselte Adresse ist, Entschlüsseln, durch den Proxy-Server, der Medienserveradresse,
und
wobei der Schritt zum Entschlüsseln, durch den Proxy-Server, der Medienserveradresse umfasst:
Aufrufen, durch den Proxy-Server, einer Anwendungsprogrammschnittstelle API zum Entschlüsseln der Medienserveradresse.

5. Verfahren zum Zugreifen auf ein Video nach Anspruch 3, wobei vor dem Schritt zum Empfangen, durch den Proxy-Server, der Videoanfrage, die durch die Set-Top-Box übertragen wird, das Verfahren weiter umfasst:
Empfangen, durch den Proxy-Server, einer Sicherheitsprotokollübergabeanfrage, die durch die Set-Top-Box übertragen wird; und
Verhandeln, durch den Proxy-Server, mit der Set-Top-Box gemäß der Sicherheitsprotokollübergabeanfrage, einen Sicherheitskommunikationskanal zu errichten, und Zurückleiten, durch den Proxy-Server, von Übergabeerfolgsinformationen an die Set-Top-Box,
oder
wobei das Verfahren weiter umfasst:
Erlangen, durch den Proxy-Server, der Videoklassifizierungsinformationen von dem Medienserver;
Erzeugen, durch den Proxy-Server, der Videonavigationsschnittstelleninformationen gemäß den Videoklassifizierungsinformationen und Übertragen der Videonavigationsschnittstelleninformationen an die Set-Top-Box, damit die Set-Top-Box die Videonavigationsschnittstelleninformationen an die Anzeigevorrichtung zur Anzeige überträgt;
Empfangen, durch den Proxy-Server, der Videotypinformationen, die von dem Anwender in der Videonavigationsschnittstelle ausgewählt werden, die durch die Set-Top-Box übertragen wird;
Erlangen, durch den Proxy-Server, aller Videoinformationen, die in den Videotypinformationen beinhaltet sind, von dem Medienserver; und
Erzeugen, durch den Proxy-Server, der Videoklassifizierungsschnittstelleninformationen gemäß den erlangten Videoinformationen und Übertragen der Videoklassifizierungsschnittstelleninformationen an die Set-Top-Box, damit die Set-Top-Box die Videoklassifizierungsschnittstelleninformationen an die Anzeigevorrichtung zur Anzeige überträgt.

6. System zum Zugreifen auf ein Video, umfassend: eine Set-Top-Box, einen Proxy-Server und einen Medienserver, **dadurch gekennzeichnet, dass**
die Set-Top-Box ein erstes Übertragungsmodul, ein erstes Empfangsmodul und ein Videodatenerlangungsmodul umfasst, wobei
das erste Übertragungsmodul der Set-Top-Box angeordnet ist, eine Videoanfrage an den Proxy-Server zu übertragen;
das erste Empfangsmodul der Set-Top-Box angeordnet ist, eine Medienserveradresse, die durch den Proxy-Server übertragen wird, zu empfangen, wobei die Medienserveradresse durch den Proxy-Server erhalten wird, der Videobeschreibungsdaten verarbeitet, die von dem Medienserver erlangt werden; und
das Videodatenerlangungsmodul der Set-Top-Box angeordnet ist, Videodaten von dem Medienserver gemäß der Medienserveradresse zu erlangen;
wobei die Set-Top-Box weiter ein drittes Übertragungsmodul und ein drittes Empfangsmodul umfasst, wobei
das dritte Empfangsmodul der Set-Top-Box angeordnet ist, Videonavigationsschnittstelleninformationen, die durch den Proxy-Server übertragen werden, zu empfangen, wobei die Videonavigationsschnittstelleninformationen durch den Proxy-Server gemäß Videoklassifizierungsinformationen erzeugt werden, die von dem Medienserver erlangt werden; und Videoklassifizierungsschnittstelleninformationen, die durch den Proxy-Server übertragen werden, zu empfangen, wobei die Videoklassifizierungsschnittstelleninformationen durch den Proxy-Server gemäß allen Videoinformationen erzeugt werden, die in Videotypinformationen beinhaltet sind, die von dem Medienserver erlangt werden; und
das dritte Übertragungsmodul der Set-Top-Box angeordnet ist, die Videonavigationsschnittstelleninformationen an eine Anzeigevorrichtung zu übertragen, damit die Anzeigevorrichtung eine Videonavigationsschnittstelle anzeigt, die von einem Anwender in der Videonavigationsschnittstelle ausgewählten Videotypinformationen an den Proxy-Server zu übertragen und die Videoklassifizierungsschnittstelleninformationen an die Anzeigevorrichtung zu übertragen, damit die Anzeigevorrichtung eine Videoklassifizierungsschnittstelle anzeigt,
und
wobei das erste Übertragungsmodul der Set-Top-Box angeordnet ist, die Videoanfrage an den Proxy-Server gemäß einem Videoauswahlergebnis des Anwenders auf der Videoklassifizierungsschnittstelle zu übertragen;
wobei der Medienserver ein erstes Übertragungsmodul und ein zweites Übertragungsmodul umfasst, wobei
das erste Übertragungsmodul des Medienservers angeordnet ist, die Videobeschreibungsdaten an den Proxy-Server zu übertragen, damit der Proxy-Server die Videobeschreibungsdaten verarbeitet, um die Medienserveradresse zu erhalten, und die Medienserveradresse an die Set-Top-Box zu übertragen; und
das zweite Übertragungsmodul des Medienservers angeordnet ist, die Videodaten an die Set-Top-Box zu übertragen;
wobei der Medienserver weiter ein drittes Übertragungsmodul umfasst;
wobei das dritte Übertragungsmodul des Medienservers angeordnet ist, die Videoklassifizierungsinformationen an den Proxy-Server zu übertragen, damit der Proxy-Server die Videonavigationsschnittstelleninformationen gemäß den Videoklassifizierungsinformationen erzeugt und die Videonavigationsschnittstelleninformationen durch die Set-Top-Box an die Anzeigevorrichtung zur Anzeige überträgt; und alle Videoinformationen, die in den Videotypinformationen beinhaltet sind, die durch den Anwender in der Videonavigationsschnittstelle ausgewählt wurden, an den Proxy-Server zu übertragen, damit der Proxy-Server die Videoklassifizierungsschnittstelleninformationen gemäß allen Videoinformationen erzeugt und die Videoklassifizierungsschnittstelleninformationen durch die Set-Top-Box an die Anzeigevorrichtung zur Anzeige überträgt.

7. System zum Zugreifen auf ein Video nach Anspruch 6, wobei die Set-Top-Box weiter ein zweites Übertragungsmodul und ein zweites Empfangsmodul umfasst, wobei
das zweite Übertragungsmodul der Set-Top-Box angeordnet ist, eine Sicherheitsprotokollübergabeanfrage an den Proxy-Server zu übertragen, bevor das erste Übertragungsmodul der Set-Top-Box die Videoanfrage an den Proxy-Server überträgt; und
das zweite Empfangsmodul der Set-Top-Box angeordnet ist, Übergabeerfolgsinformationen zu empfangen, die durch den Proxy-Server zurückgeleitet werden.

8. System zum Zugreifen auf ein Video nach Anspruch 6, wobei der Proxy-Server ein erstes Empfangsmodul, ein erstes Erlangungsmodul, ein Verarbeitungsmodul und ein erstes Übertragungsmodul umfasst, wobei:
das erste Empfangsmodul des Proxy-Servers angeordnet ist, die Videoanfrage zu empfangen, die durch die Set-Top-Box übertragen wird;
das erste Erlangungsmodul des Proxy-Servers angeordnet ist, die Videobeschreibungsdaten von dem Medienserver gemäß der Videoanfrage zu erlangen;
das Verarbeitungsmodul des Proxy-Servers angeordnet ist, die Videobeschreibungsdaten zu verarbeiten, um die Medienserveradresse zu erhalten; und
das erste Übertragungsmodul des Proxy-Servers angeordnet ist, die erhaltene Medienserveradresse an die Set-Top-Box zu übertragen, damit die Set-Top-Box die Videodaten von dem Medienserver erlangt.

9. System zum Zugreifen auf ein Video nach Anspruch 8, wobei der Proxy-Server weiter ein Beurteilungsmodul und ein Entschlüsselungsmodul umfasst, wobei
das Beurteilungsmodul des Proxy-Servers angeordnet ist, zu beurteilen, ob die Medienserveradresse eine verschlüsselte Adresse ist, bevor die Medienserveradresse an die Set-Top-Box übertragen wird,
und
das Entschlüsselungsmodul des Proxy-Servers angeordnet ist, die Medienserveradresse zu entschlüsseln, um eine entschlüsselte Medienserveradresse zu erhalten, falls das Beurteilungsmodul des Proxy-Servers beurteilt, dass die Medienserveradresse eine verschlüsselte Adresse ist,
und
wobei das Entschlüsselungsmodul des Proxy-Servers angeordnet ist, eine Anwendungsprogrammschnittstelle API zum Entschlüsseln der Medienserveradresse aufzurufen.

10. System zum Zugreifen auf ein Video nach Anspruch 8, wobei der Proxy-Server weiter ein zweites Empfangsmodul und ein Verhandlungsmodul umfasst, wobei
das zweite Empfangsmodul des Proxy-Servers angeordnet ist, eine Sicherheitsprotokollübergabeanfrage zu empfangen, die durch die Set-Top-Box übertragen wird, bevor das erste Empfangsmodul des Proxy-Servers die Videoanfrage empfängt, die durch die Set-Top-Box übertragen wird; und
das Verhandlungsmodul des Proxy-Servers angeordnet ist, mit der Set-Top-Box gemäß der Sicherheitsprotokollübergabeanfrage zu verhandeln, um einen Sicherheitskommunikationskanal zu errichten und Übergabeerfolgsinformationen an die Set-Top-Box zurückzuleiten,
oder
wobei der Proxy-Server weiter ein zweites Erlangungsmodul, ein Schnittstellenerzeugungsmodul und ein drittes Empfangsmodul umfasst, wobei
das zweite Erlangungsmodul des Proxy-Servers angeordnet ist, die Videoklassifizierungsinformationen von dem Medienserver zu erlangen;
das Schnittstellenerzeugungsmodul des Proxy-Servers angeordnet ist, die Videonavigationsschnittstelleninformationen gemäß den Videoklassifizierungsinformationen zu erzeugen, die Videonavigationsschnittstelleninformationen an die Set-Top-Box zu übertragen, damit die Set-Top-Box die Videonavigationsschnittstelleninformationen an die Anzeigevorrichtung zur Anzeige überträgt, die Videoklassifizierungsschnittstelleninformationen gemäß allen Videoinformationen, die in den Videotypinformationen beinhaltet sind, die von dem Medienserver erlangt werden zu erzeugen, und die Videoklassifizierungsschnittstelleninformationen an die Set-Top-Box zu übertragen, damit die Set-Top-Box die Videoklassifizierungsschnittstelleninformationen an die Anzeigevorrichtung zur Anzeige überträgt;
das dritte Empfangsmodul des Proxy-Servers angeordnet ist, die Videotypinformationen zu empfangen, die von dem Anwender in der Videonavigationsschnittstelle ausgewählt wurden, die durch die Set-Top-Box übertragen wurden; und
das dritte Erlangungsmodul des Proxy-Servers angeordnet ist, alle Videoinformationen, die in den Videotypinformationen beinhaltet sind, von dem Medienserver zu erlangen.

## Revendications

1. Procédé d'accès à une vidéo, **caractérisé en ce qu'**il comprend les étapes suivantes :
la transmission (101), par un boîtier décodeur, d'une requête vidéo à un serveur mandataire ;
la réception (102), par le boîtier décodeur, d'une adresse de serveur média transmise par le serveur mandataire, dans lequel l'adresse de serveur média est obtenue par le serveur mandataire traitant des données de description vidéo acquises auprès du serveur média ; et
l'acquisition (103), par le boîtier décodeur, de données vidéo auprès du serveur média selon l'adresse de serveur média ;
dans lequel le procédé comprend en outre :
la réception (201), par le boîtier décodeur, d'informations d'interface de navigation vidéo transmises par le serveur mandataire, dans lequel les informations d'interface de navigation vidéo sont générées par le serveur mandataire selon des informations de classification vidéo acquises auprès du serveur média ;
la transmission (202), par le boîtier décodeur, des informations d'interface de navigation vidéo à un dispositif d'affichage pour que le dispositif d'affichage affiche une interface de navigation vidéo ;
la transmission (203), par le boîtier décodeur, d'informations de type de vidéo sélectionnées par un utilisateur dans l'interface de navigation vidéo au serveur mandataire ;
la réception (204), par le boîtier décodeur, d'informations d'interface de classification vidéo transmises par le serveur mandataire, dans lequel les informations d'interface de classification vidéo sont générées par le serveur mandataire selon toutes les informations vidéo incluses dans les informations de type de vidéo acquises auprès du serveur média ; et
la transmission (705), par le boîtier décodeur, des informations d'interface de classification vidéo au dispositif d'affichage pour que le dispositif d'affichage affiche une interface de classification vidéo, et,
dans lequel l'étape de transmission, par le boîtier décodeur, de la requête vidéo au serveur mandataire comprend :
la transmission (501), par le boîtier décodeur, de la requête vidéo au serveur mandataire selon un résultat de sélection de vidéo de l'utilisateur sur l'interface de classification vidéo ;
dans lequel le procédé comprend en outre :
la transmission (801), par le serveur média, des données de description vidéo au serveur mandataire pour que le serveur mandataire traite les données de description vidéo pour obtenir l'adresse de serveur média et transmette l'adresse de serveur média au boîtier décodeur ; et
la transmission (802), par le serveur média, des données vidéo au boîtier décodeur pour que le boîtier décodeur lise la vidéo ;
dans lequel le procédé comprend en outre :
la transmission (703), par le serveur média, des informations de classification vidéo au serveur mandataire pour que le serveur mandataire génère les informations d'interface de navigation vidéo selon les informations de classification vidéo et transmette les informations d'interface de navigation vidéo par le biais du boîtier décodeur au dispositif d'affichage pour affichage ; et
la transmission (704), par le serveur média, de toutes les informations vidéo incluses dans les informations de type de vidéo sélectionnées par l'utilisateur dans l'interface de navigation vidéo au serveur mandataire pour que le serveur mandataire génère les informations d'interface de classification vidéo selon toutes les informations vidéo et transmette les informations d'interface de classification vidéo par le biais du boîtier décodeur au dispositif d'affichage pour affichage.

2. Procédé d'accès à une vidéo selon la revendication 1, dans lequel, avant la transmission, par le boîtier décodeur, de la requête vidéo au serveur mandataire, le procédé comprend en outre :
la transmission, par le boîtier décodeur, d'une requête d'établissement de liaison de protocole de sécurité au serveur mandataire et la réception, par le boîtier décodeur, d'informations de succès d'établissement de liaison renvoyées par le serveur mandataire.

3. Procédé d'accès à une vidéo selon la revendication 1, comprenant en outre les étapes suivantes :
la réception, par le serveur mandataire, de la requête vidéo transmise par le boîtier décodeur ;
l'acquisition, par le serveur mandataire, des données de description vidéo auprès du serveur média selon la requête vidéo ;
le traitement, par le serveur mandataire, des données de description vidéo pour obtenir l'adresse de serveur média ; et
la transmission, par le serveur mandataire, de l'adresse de serveur média au boîtier décodeur pour que le boîtier décodeur acquière les données vidéo auprès du serveur média.

4. Procédé d'accès à une vidéo selon la revendication 3, dans lequel, avant la transmission, par le serveur mandataire, de l'adresse de serveur média au boîtier décodeur, le procédé comprend en outre :
le fait de juger, par le serveur mandataire, si l'adresse de serveur média est une adresse chiffrée, et si l'adresse de serveur média est une adresse chiffrée, le déchiffrement, par le serveur mandataire, de l'adresse de serveur média,
et,
dans lequel l'étape de déchiffrement, par le serveur mandataire, de l'adresse de serveur média comprend :
l'appel, par le serveur mandataire, d'une interface de programme d'application API pour déchiffrer l'adresse de serveur média.

5. Procédé d'accès à une vidéo selon la revendication 3, dans lequel, avant l'étape de réception, par le serveur mandataire, de la requête vidéo transmise par le boîtier décodeur, le procédé comprend en outre :
la réception, par le serveur mandataire, d'une requête d'établissement de liaison de protocole de sécurité transmise par le boîtier décodeur ; et
la négociation, par le serveur mandataire, avec le boîtier décodeur selon la requête d'établissement de liaison de protocole de sécurité pour établir un canal de communication de sécurité, et le renvoi, par le serveur mandataire, d'informations de succès d'établissement de liaison au boîtier décodeur,
ou,
dans lequel le procédé comprend en outre :
l'acquisition, par le serveur mandataire, des informations de classification vidéo auprès du serveur média ;
la génération, par le serveur mandataire, des informations d'interface de navigation vidéo selon les informations de classification vidéo, et la transmission des informations d'interface de navigation vidéo au boîtier décodeur pour que le boîtier décodeur transmette les informations d'interface de navigation vidéo au dispositif d'affichage pour affichage ;
la réception, par le serveur mandataire, des informations de type de vidéo sélectionnées par l'utilisateur dans l'interface de navigation vidéo transmises par le boîtier décodeur ;
l'acquisition, par le serveur mandataire, de toutes les informations vidéo incluses dans les informations de type de vidéo auprès du serveur média ; et
la génération, par le serveur mandataire, des informations d'interface de classification vidéo selon les informations vidéo acquises, et la transmission des informations d'interface de classification vidéo au boîtier décodeur pour que le boîtier décodeur transmette les informations d'interface de classification vidéo au dispositif d'affichage pour affichage.

6. Système d'accès à une vidéo, comprenant : un boîtier décodeur, un serveur mandataire, et un serveur média, **caractérisé en ce que**
le boîtier décodeur comprend un premier module de transmission, un premier module de réception et un module d'acquisition de données vidéo, dans lequel
le premier module de transmission du boîtier décodeur est agencé pour transmettre une requête vidéo au serveur mandataire,
le premier module de réception du boîtier décodeur est agencé pour recevoir une adresse de serveur média transmise par le serveur mandataire, dans lequel l'adresse de serveur média est obtenue par le serveur mandataire traitant des données de description vidéo acquises auprès du serveur média ; et
le module d'acquisition de données vidéo du boîtier décodeur est agencé pour acquérir des données vidéo auprès du serveur média selon l'adresse de serveur média ;
dans lequel le boîtier décodeur comprend en outre un troisième module de transmission et un troisième module de réception, dans lequel
le troisième module de réception du boîtier décodeur est agencé pour recevoir des informations d'interface de navigation vidéo transmises par le serveur mandataire, dans lequel les informations d'interface de navigation vidéo sont générées par le serveur mandataire selon des informations de classification vidéo acquises auprès du serveur média ; et recevoir des informations d'interface de classification vidéo transmises par le serveur mandataire, dans lequel les informations d'interface de classification vidéo sont générées par le serveur mandataire selon toutes les informations vidéo incluses dans des informations de type de vidéo acquises auprès du serveur média ; et
le troisième module de transmission du boîtier décodeur est agencé pour transmettre les informations d'interface de navigation vidéo à un dispositif d'affichage pour que le dispositif d'affichage affiche une interface de navigation vidéo, transmette les informations de type de vidéo sélectionnées par un utilisateur dans l'interface de navigation vidéo au serveur mandataire, et transmette les informations d'interface de classification vidéo au dispositif d'affichage pour que le dispositif d'affichage affiche une interface de classification vidéo,
et,
dans lequel le premier module de transmission du boîtier décodeur est agencé pour transmettre la requête vidéo au serveur mandataire selon un résultat de sélection de vidéo de l'utilisateur sur l'interface de classification vidéo ;
dans lequel le serveur média comprend un premier module de transmission et un deuxième module de transmission, dans lequel
le premier module de transmission du serveur média est agencé pour transmettre les données de description vidéo au serveur mandataire pour que le serveur mandataire traite les données de description vidéo pour obtenir l'adresse de serveur média et transmette l'adresse de serveur média au boîtier décodeur ; et
le deuxième module de transmission du serveur média est agencé pour transmettre les données vidéo au boîtier décodeur ;
dans lequel le serveur média comprend en outre un troisième module de transmission ;
le troisième module de transmission du serveur média est agencé pour transmettre les informations de classification vidéo au serveur mandataire pour que le serveur mandataire génère les informations d'interface de navigation vidéo selon les informations de classification vidéo et transmette les informations d'interface de navigation vidéo par le biais du boîtier décodeur au dispositif d'affichage pour affichage ; et transmettre toutes les informations vidéo incluses dans les informations de type de vidéo sélectionnées par l'utilisateur dans l'interface de navigation vidéo au serveur mandataire pour que le serveur mandataire génère les informations d'interface de classification vidéo selon toutes les informations vidéo et transmette les informations d'interface de classification vidéo par le biais du boîtier décodeur au dispositif d'affichage pour affichage.

7. Système d'accès à une vidéo selon la revendication 6, dans lequel le boîtier décodeur comprend en outre un deuxième module de transmission et un deuxième module de réception, dans lequel
le deuxième module de transmission du boîtier décodeur est agencé pour transmettre une requête d'établissement de liaison de protocole de sécurité au serveur mandataire avant que le premier module de transmission du boîtier décodeur transmette la requête vidéo au serveur mandataire ; et
le deuxième module de réception du boîtier décodeur est agencé pour recevoir des informations de succès d'établissement de liaison renvoyées par le serveur mandataire.

8. Système d'accès à une vidéo selon la revendication 6, dans lequel le serveur mandataire comprend un premier module de réception, un premier module d'acquisition, un module de traitement et un premier module de transmission, dans lequel
le premier module de réception du serveur mandataire est agencé pour recevoir la requête vidéo transmise par le boîtier décodeur ;
le premier module d'acquisition du serveur mandataire est agencé pour acquérir les données de description vidéo auprès du serveur média selon la requête vidéo ;
le module de traitement du serveur mandataire est agencé pour traiter les données de description vidéo pour obtenir l'adresse de serveur média ; et
le premier module de transmission du serveur mandataire est agencé pour transmettre l'adresse de serveur média obtenue au boîtier décodeur pour que le boîtier décodeur acquière les données vidéo auprès du serveur média.

9. Système d'accès à une vidéo selon la revendication 8, dans lequel le serveur mandataire comprend en outre un module de jugement et un module de déchiffrement, dans lequel
le module de jugement du serveur mandataire est agencé pour juger si l'adresse de serveur média est une adresse chiffrée avant la transmission de l'adresse de serveur média au boîtier décodeur, et
le module de déchiffrement du serveur mandataire est agencé pour déchiffrer l'adresse de serveur média pour obtenir une adresse de serveur média déchiffrée au cas où le module de jugement du serveur mandataire juge que l'adresse de serveur média est une adresse chiffrée,
et,
dans lequel le module de déchiffrement du serveur mandataire est agencé pour appeler une interface de programme d'application API pour déchiffrer l'adresse de serveur média.

10. Système d'accès à une vidéo selon la revendication 8, dans lequel le serveur mandataire comprend en outre un deuxième module de réception et un module de négociation, dans lequel
le deuxième module de réception du serveur mandataire est agencé pour recevoir une requête d'établissement de liaison de protocole de sécurité transmise par le boîtier décodeur avant que le premier module de réception du serveur mandataire reçoive la requête vidéo transmise par le boîtier décodeur ; et
le module de négociation du serveur mandataire est agencé pour négocier avec le boîtier décodeur selon la requête d'établissement de liaison de protocole de sécurité pour établir un canal de communication de sécurité, et renvoyer des informations de succès d'établissement de liaison au boîtier décodeur,
ou,
dans lequel le serveur mandataire comprend en outre un deuxième module d'acquisition, un module de génération d'interface, et un troisième module de réception, dans lequel
le deuxième module d'acquisition du serveur mandataire est agencé pour acquérir les informations de classification vidéo auprès du serveur média ;
le module de génération d'interface du serveur mandataire est agencé pour générer les informations d'interface de navigation vidéo selon les informations de classification vidéo, transmettre les informations d'interface de navigation vidéo au boîtier décodeur pour que le boîtier décodeur transmette les informations d'interface de navigation vidéo au dispositif d'affichage pour affichage, générer les informations d'interface de classification vidéo selon toutes les informations vidéo incluses dans les informations de type de vidéo acquises auprès du serveur média, et transmettre les informations d'interface de classification vidéo au boîtier décodeur pour que le boîtier décodeur transmette les informations d'interface de classification vidéo au dispositif d'affichage pour affichage ;
le troisième module de réception du serveur mandataire est agencé pour recevoir les informations de type de vidéo sélectionnées par l'utilisateur dans l'interface de navigation vidéo transmises par le boîtier décodeur ; et
le troisième module d'acquisition du serveur mandataire est agencé pour acquérir toutes les informations vidéo incluses dans les informations de type de vidéo auprès du serveur média.
